# EUROPÄISCHE PATENTANMELDUNG

(11) **EP 4 687 222 A1**
(43) Veröffentlichungstag der Anmeldung: **04.02.2026**
(21) Anmeldenummer: 25174822.4
(22) Anmeldetag: 07.05.2025
(51) Int. Cl.: H01R 4/48, H01R 4/64, H02G 13/00

(54) **BLITZSCHUTZLEITERKLEMME**

(30) Priorität: 30.07.2024 EP 24191800
(71) Anmelder: DEHN SE, 92318 Neumarkt i.d. OPf. (DE)
(72) Erfinder: Reichl, Sebastian, 92318 Neumarkt i.d.OPf. (DE); Simbeck, Maximilian, 92318 Neumarkt i.d.OPf. (DE)
(74) Vertreter: Prinz & Partner mbB

(57) **Zusammenfassung**

Es ist eine Blitzschutzleiterklemme (110) zur Befestigung von wenigstens einem Blitzschutz- oder Erdungsleiter an einer Potenzialausgleichsschiene gezeigt. Die Blitzschutzleiterklemme (110) umfasst einen Anlageschenkel (116) zur Anlage an der Potentialausgleichsschiene und einen dem Anlageschenkel (116) gegenüberliegenden Federschenkel (118). Der Anlageschenkel (116) und der Federschenkel (118) sind dabei über einen Übergangsabschnitt (120) miteinander verbunden, der eine erste Aufnahme (122) für einen Rundleiter ausbildet. Zudem wird eine zweite Aufnahme (124) für einen Flachleiter durch den Anlageschenkel (116) und den Federschenkel (118) ausgebildet.

## Beschreibung

Die Erfindung betrifft eine Blitzschutzleiterklemme zur Fixierung von einem Blitzschutz- oder Erdungsleiter an einer Potenzialausgleichsschiene.

Aus dem Stand der Technik sind Blitzschutzleiterklemmen bekannt, mit denen ein Blitzschutz- oder Erdungsleiter elektrisch an Bewehrungsmaterial angebunden werden kann, um den wenigstens einen Blitzschutz- oder Erdungsleiter oder eine daran angeschlossene Komponente zu erden. Daher können solche Klemmen auch als Erdungsklemmen bezeichnet werden.

Üblicherweise bestehen die Blitzschutzleiterklemmen aus in entgegengesetzte Richtungen abstehende Federschenkel, die aus einem elektrisch leitfähigen Material gebildet sind und eine Form zum Aufnehmen und Kontaktieren eines Abschnitts des jeweiligen Blitzschutzes- oder Erdungsleiters bzw. Bewehrungsmaterials aufweisen. Die Federschenkel sind dabei über einen Verbindungsabschnitt miteinander verbunden, sodass eine Blitzschutzleiterklemme entsteht, die einen Blitzschutz- oder Erdungsleiter an einem Bewehrungsmaterial fixieren kann.

Dabei muss die Blitzschutzleiterklemme so gewählt werden, dass sie zu dem spezifischen Leiter sowie zu dem spezifischen Bewehrungsmaterial passt. Dementsprechend gibt es verschiedene Größen der Blitzschutzleiterklemmen für unterschiedliche Arten von Leiter, bspw. Rundleiter oder Flachleiter, sowie für unterschiedliche Querschnitte der Leiter bzw. des Bewehrungsmaterials.

Hinzu kommt, dass insbesondere beim Betreten von Bewehrungsmatten, der Blitzschutz- oder Erdungsleiter oder das Bewehrungsmaterial aus der Blitzschutzleiterklemme rutschen kann, da hierdurch die Federschenkel in Schwingungen geraten und auseinandergedrückt werden können. Somit ist eine sichere Verbindung zwischen dem Leitermaterial und dem Bewehrungsmaterial in einem solchen Fall nicht mehr gegeben. Um dennoch einen Blitzschutz gewährleisten zu können, müssen die Verbindungen zwischen den Blitzschutz-oder Erdungsleitern und dem Bewehrungsmaterial mehrfach überprüft werden, was die Dauer des Bauprojekts verlängert und die Kosten erhöht.

Aus dem Stand der Technik ist außerdem eine Blitzschutzleiterklemme bekannt, mit der ein oder mehrere Leiter an einer Potenzialausgleichsschiene elektrisch angebunden werden können, um den wenigstens einen Blitzschutz-oder Erdungsleiter oder eine daran angeschlossene Komponente zu erden. Auch diese Blitzschutzleiterklemmen können als Erdungsklemmen bezeichnet werden.

Eine Potenzialausgleichsschiene dient grundsätzlich dem Potenzialausgleich und ist ein Bestandteil der Elektroinstallation und des inneren Blitzschutzes eines Gebäudes. Die Potenzialausgleichsschiene legt dabei alle über sie miteinander verbundenen Komponenten sowie einen Fundamenterder beziehungsweise einen Ringerder auf ein gemeinsames Erdpotenzial.

Die Herstellung der aus dem Stand der Technik bekannten Blitzschutzleiterklemmen ist jedoch aufgrund der verwendeten Komponenten aufwendig, da zahlreiche Arbeitsschritte notwendig sind, um die zahlreichen Komponenten relativ zueinander korrekt anzuordnen, um die Blitzschutzleiterklemme herstellen zu können. Die komplette Herstellung mit den zahlreichen Arbeitsschritten hat hohe Herstellungskosten zur Folge.

Daher ist es eine Aufgabe der Erfindung, eine Blitzschutzleiterklemme zur Fixierung von verschiedenen Blitzschutz- oder Erdungsleiter an einer Potenzialausgleichsschiene bereitzustellen, die einfach herzustellen und somit kostengünstig ist und eine sichere Fixierung gewährleistet.

Die Aufgabe wird erfindungsgemäß gelöst durch eine Blitzschutzleiterklemme zur Befestigung von wenigstens einem Blitzschutz- oder Erdungsleiter an einer Potenzialausgleichsschiene (für den Blitzschutz). Dabei umfasst die Blitzschutzleiterklemme einen Anlageschenkel zur Anlage an der Potenzialausgleichsschiene und einen dem Anlageschenkel gegenüberliegenden Federschenkel. Der Anlageschenkel und der Federschenkel sind dabei über einen Übergangsabschnitt miteinander verbunden, der eine erste Aufnahme für einen Rundleiter ausbildet. Zudem wird eine zweite Aufnahme für einen Flachleiter durch den Anlageschenkel und den Federschenkel ausgebildet.

Die Blitzschutzleiterklemme weist also eine erste Aufnahme für einen Rundleiter und eine zweite Aufnahme für einen Flachleiter auf, in dem eine Ausbuchtung im Übergangsabschnitt zwischen dem Anlageschenkel und dem Federschenkel vorgesehen ist. Somit kann durch die Blitzschutzleiterklemme mehr als ein Blitzschutz- bzw. Erdungsleiter an der Potenzialausgleichsschiene befestigt werden, insbesondere ein Flachleiter und ein Rundleiter gleichzeitig, also zwei Blitzschutz- bzw. Erdungsleiter unterschiedlicher Art. Dabei kann mit der Blitzschutzleiterklemme sowohl eine Verbindung von einem Rundleiter, eine Verbindung von einem Flachleiter sowie eine Verbindung von einem Rundleiter und einem Flachleiter mit der Potentialausgleichsschiene realisiert werden.

Somit ist die Blitzschutzleiterklemme flexibel und vielseitig einsetzbar, da sowohl Rund- als auch Flachleiter einzeln oder gleichzeitig an der Potentialausgleichsschiene befestigt werden können.

Es ist auch denkbar, dass mehr als ein Rundleiter von einer Klemmvorrichtung gehalten wird, sodass auch mehr als ein Rundleiter durch die Blitzschutzleiterklemme mit der Potentialausgleichsschiene verbunden werden kann.

Grundsätzlich werden nachfolgend Rundleiter und Flachleiter unter dem Begriff Leiter zusammengefasst.

Bei den Blitzschutz- oder Erdungsleitern handelt es sich vorzugsweise um übliche Leitungsmaterialen im Blitzschutzbereich. Mit anderen Worten ist der Blitzschutz- oder Erdungsleiter aus einem Material ausgebildet, das für die Verwendung im Blitzschutz geeignet ist.

Zudem kann die Aufnahme der Klemmvorrichtung, welche durch den Übergangsabschnitt definiert wird, Blitzschutz- oder Erdungsleitern verschiedenster Größen aufnehmen und klemmend fixieren. Dabei ist die Blitzschutzleiterklemme in einer bevorzugten Ausführungsform insbesondere dafür ausgelegt, Flachleiter von bis zu 30 mm x 3,5 mm und Rundleiter mit einem Durchmesser zwischen 6 und 12 mm zu fixieren.

Die Blitzschutzleiterklemme ist also vielseitig und flexibel einsetzbar, sodass für eine Vielzahl an möglichen Anwendungen lediglich eine einzige Art von Blitzschutzleiterklemme benötigt wird.

Bei den Blitzschutz- oder Erdungsleiter handelt es sich insbesondere um Leiter ohne Abschirmung. Das heißt, die Blitzschutz- oder Erdungsleiter sind nicht von einer metallischen Folie oder einem Geflecht bedeckt.

Vorzugsweise bilden die Klemmvorrichtung mit den Blitzschutz- oder Erdungsleitern eine formschlüssige Verbindung, sodass durch den Formschluss zusätzlich ein Herausrutschen verhindert wird, insbesondere ein Herausrutschen des Blitzschutz- oder Erdungsleiters oder einer anderen Komponente, die mit der Klemmvorrichtung klemmend gehalten ist.

Bei dem Übergangsabschnitt kann es sich um einen geformten, insbesondere gebogenen, Abschnitt handeln, der die erste Aufnahme ausbildet.

Vorzugsweise ist die Potenzialausgleichsschiene als Flachleiter ausgebildet, sodass der Anlageschenkel flächig auf der Potenzialausgleichsschiene aufliegen kann und somit die bestmöglichste elektrische Anbindung hat.

Zudem kann der Federschenkel einen Niederhaltabschnitt aufweisen, der an einer vom Übergangsabschnitt abgewandten Seite des Federschenkels vorgesehen ist. Dabei ist der Niederhaltabschnitt in Richtung des Anlageschenkels vorgespannt. Durch den Niederhaltabschnitt kann ein Flachleiter gegen den Übergangsabschnitt gedrückt und fixiert werden.

Vorzugsweise weist der Federschenkel einen Sicherungsvorsprung auf. Der Sicherungsvorsprung wird dabei insbesondere ausgebildet, indem der Federschenkel gestanzt wird. Der Sicherungsvorsprung stellt eine zusätzliche Sicherung dar, um einen Rausrutschen des Blitzschutz- bzw. Erdungsleiters zu verhindern.

Alternativ und/oder zusätzlich ist es auch möglich, dass der Anlageschenkel einen Sicherungsvorsprung aufweist.

Vorzugsweise erstreckt sich der Sicherungsvorsprung in Richtung des Übergangsabschnitts bzw. des Anlageabschnitts.

Gemäß einer Ausführungsform ist in dem Anlageschenkel und in dem Federschenkel jeweils eine Befestigungsöffnung vorgesehen, wobei die beiden Befestigungsöffnungen miteinander fluchten und eingerichtet sind, ein Befestigungsmittel aufzunehmen, womit die Blitzschutzleiterklemme an der Potenzialausgleichsschiene befestigbar ist.

Vorzugsweise wird die Blitzschutzleiterklemme dabei mittels einer Schraube an der Potenzialausgleichsschiene befestigt. Dadurch ist die Blitzschutzleiterklemme drehbar an der Potentialausgleichsschiene befestigt, sodass die Blitzschutzleiterklemme für eine Vielzahl an Befestigungsrichtungen verwendet werden kann. In anderen Worten, kann die Blitzschutzleiterklemme also drehbar gelagert sein, sodass die Blitzschutzleiterklemme in Bezug zur Potenzialausgleichsschiene insbesondere um 360° verdrehbar ist.

Gemäß einer alternativen Ausführungsform kann die Blitzschutzleiterklemme aber auch an die Potenzialausgleichsschiene genietet oder anderweitig befestigt werden. Durch die Befestigungsöffnung des Federschenkels kann sich dann ein Fixiermittel erstrecken, um den Flachleiter mit der Blitzschutzleiterklemme zusätzlich zu fixieren.

Die Befestigungsöffnung kann sowohl eine runde als auch eine viereckige, insbesondere quadratische Form, aufweisen. Dabei ist es nicht notwendig, dass die Befestigungsöffnungen des Anlageschenkels und des Federschenkels die gleiche Form haben. Beispielsweise kann die Befestigungsöffnung des Anlageschenkels kreisrund sein, während die Befestigungsöffnung des Federschenkels quadratisch ist.

Ein weiterer Aspekt sieht vor, dass der Übergangsabschnitt im Querschnitt teilkreisförmig ausgebildet ist. Dabei ist der Übergangsabschnitt im Querschnitt länger als ein Halbkreis ausgebildet, sodass der Rundleiter bestmöglich gesichert werden kann. Hierdurch ist also sichergestellt, dass der Rundleiter nicht versehentlich aus der ersten Aufnahme herausrutschen kann.

Vorzugsweise kann dabei der Querschnitt des Übergangsabschnitts tendenziell kleiner als der Querschnitt des zu befestigenden Rundleiters sein, damit der Rundleiter durch den Übergangsabschnitt festgeklemmt wird und ein Verrutschen des Rundleiters verhindert werden kann.

Die Blitzschutzleiterklemme ist beispielsweise einstückig aus einem Federblech gefertigt. Insbesondere in Hinblick auf den im Vergleich zu dem zu befestigenden Rundleiter vorzugsweise kleineren Querschnitt des Übergangsabschnitts lässt sich die Blitzschutzleiterklemme somit für einen etwas größeren Leiterquerschnitt aufbiegen. Zudem lassen sich durch das Austanzen und Biegen der Blitzschutzleiterklemme aus einem Federblech die Herstellungskosten reduzieren.

Gemäß einer Ausführungsform ist der Federschenkel länger als der Anlageschenkel, insbesondere wobei der Anlageschenkel wenigstens halb so lang wie der Federschenkel ist. Beispielsweise entspricht die Länge des Anlageschenkels wenigstens zwei Dritteln der Länge des Federschenkels. Durch die unterschiedliche Länge des Anlageschenkels und des Federschenkels wird das Einführen der Leiter vereinfacht, da eine Einfädelgeometrie aufgrund der unterschiedlichen Längen der beiden Schenkel gegeben ist, also der Längen des Federschenkels und des Anlageschenkels. Zudem kann der Federschenkel beim Einführen des Leiters leicht aufgebogen werden, sodass der Leiter leicht in die Blitzschutzleiterklemme eingeführt werden kann.

Der Anlageschenkel und/oder der Federschenkel können bzw. kann eine Ausbuchtung aufweisen, durch die eine dritte Aufnahme, insbesondere für einen Rundleiter, definiert wird. Dabei ist die Größe von benachbarten Aufnahmen unterschiedlich. Somit können Leiter mit verschiedenen Größen gleichzeitig mit lediglich einer Blitzschutzleiterklemme an der Potentialausgleichschiene befestigt werden.

Wenn sowohl in dem Anlageschenkel als auch in dem Federschenkel jeweils eine Ausbuchtung vorgesehen ist, so kann die Blitzschutzleiterklemme sogar vier Aufnahmen aufweisen.

Beispielsweise weisen die Ausbuchtungen im Anlageschenkel als auch im Federschenkel die gleiche Größe auf und liegen sich einander gegenüber, sodass die beiden Ausbuchtungen dann zusammen eine Aufnahme ausbilden.

Vorzugsweise weisen bzw. weist der Anlageschenkel und/oder der Federschenkel Prägungen auf. Durch die Prägungen kann die Stabilität des entsprechenden Schenkels und damit die der Blitzschutzleiterklemme erhöht werden, sodass auch bei einer hohen Belastung der Blitzschutzleiterklemme sichergestellt ist, dass die Leiter durchgängig mit der Potentialausgleichsschiene verbunden sind.

Prinzipiell liegt der Vorteil der Blitzschutzleiterklemme darin, dass die Blitzschutzleiterklemme vielseitig und flexibel anwendbar ist, sodass sowohl verschiedene Leitergrößen als auch Rundleiter sowie Flachleiter fixiert werden können.

Weitere Vorteile und Eigenschaften der Erfindung ergeben sich aus der nachfolgenden Beschreibung und den Zeichnungen, auf die nachfolgend Bezug genommen wird. In den Zeichnungen zeigen:
- Figur 1 eine perspektivische Ansicht der Blitzschutzleiterklemme mit einem Flachleiter, einer Potenzialausgleichsschiene und einem Rundleiter; und
- Figur 2 eine perspektivische Ansicht der Blitzschutzleiterklemme aus Figur 1.

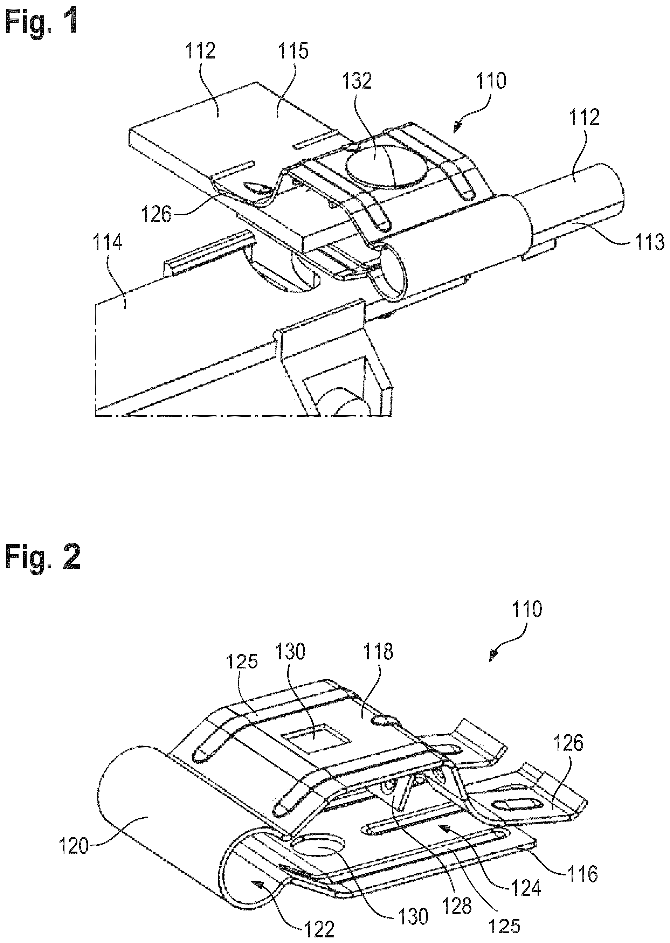

In den Figuren 1 und 2 ist eine Blitzschutzleiterklemme 110 gezeigt, die zwei Blitzschutz- oder Erdungsleiter 112 an einer Potenzialausgleichsschiene 114 für den Blitzschutz befestigt.

In der gezeigten Ausführungsform ist die Potenzialausgleichsschiene 114 als eine flache Schiene bzw. ein Flachleiter ausgebildet.

Die Blitzschutz- oder Erdungsleiter 112 dagegen sind einmal als Flachleiter 115 und einmal als Rundleiter 113 ausgeführt.

Der Flachleiter 115 kann Maße von bis zu 30 mm x 3,5 mm haben, wohingegen der Rundleiter 113 einen Durchmesser zwischen 6 und 12 mm haben kann.

Die Blitzschutzleiterklemme 110 ist insbesondere eingerichtet, einen Blitzschutz- oder Erdungsleiter 112 ohne Abschirmung an einer Potenzialausgleichsschiene 114 zu fixieren. Das heißt, der Blitzschutz- oder Erdungsleiter 12 weist keine metallische Ummantelung oder ein metallisches Geflecht auf.

Die Blitzschutzleiterklemme 110 weist einen Anlageschenkel 116 auf, welcher an der Potenzialausgleichsschiene 114 anliegt.

Ein Federschenkel 118 liegt dem Anlageschenkel 116 gegenüber, wobei der Anlageschenkel 116 und der Federschenkel 118 über einen Übergangsabschnitt 120 miteinander verbunden sind.

Der Übergangsabschnitt 120 definiert dabei eine erste Aufnahme 122 für den Rundleiter 113.

Der Anlageschenkel 116 und der Federschenkel 118 bilden dagegen eine zweite Aufnahme 124 für den Flachleiter 115.

Die Blitzschutzleiterklemme 110 wird vorzugsweise einstückig aus einem Federblech gefertigt, sodass zunächst die Blitzschutzleiterklemme 110 aus dem Federblech ausgestanzt und anschließend geformt wird.

Um die Stabilität der Blitzschutzleiterklemme zu erhöhen, weisen der Anlageschenkel 116 und der Federschenkel 118 in der in den Figuren gezeigten Ausführungsform Prägungen 125 auf, wie insbesondere aus Figur 2 hervorgeht.

Alternativ kann auch nur der Anlageschenkel 116, nur der Federschenkel 118 oder weder der Anlageschenkel 116 noch der Federschenkel 118 Prägungen 125 aufweisen.

Damit die erste Aufnahme 122 eine möglichst definierte Aufnahme für den Rundleiter 113 bildet, ist der Übergangsabschnitt 120 im Querschnitt teilkreisförmig ausgebildet. Für eine möglichst sichere Befestigung des Rundleiters 113 ist der Übergangsabschnitt 120 im Querschnitt insbesondere länger als ein Halbkreis ausgebildet. Hierdurch ergibt sich eine Sicherung für den Rundleiter 113, da sich der Übergangsabschnitt 120 um den Rundleiter 113 teilweise schließt.

Zusätzlich ist der Querschnitt des Übergangsabschnitts 120 kleiner als der Querschnitt des zu befestigenden Rundleiters 113. Dadurch wird der Rundleiter 113 von dem Übergangsabschnitt 120 geklemmt, sodass eine zusätzliche Sicherung für den Rundleiter 113 bereitgestellt wird.

Da die zweite Aufnahme 124 als Aufnahme für den Flachleiter 115 vorgesehen ist, weist der Federschenkel 118 einen Niederhaltabschnitt 126 auf. Dieser ist auf der vom Übergangsabschnitt 120 abgewandten Seite des Federschenkels 118 vorgesehen und in Richtung des Anlageschenkels 116 vorgespannt, sodass der Niederhaltabschnitt 126 den Flachleiter 115 auf den Anlageschenkel 116 drückt.

Somit ist durch das Vorsehen der ersten Aufnahme 122 für den Rundleiter 113 und der zweiten Aufnahme 124 für den Flachleiter 115 eine gleichzeitige Befestigung von Rund- und Flachleiter an der Potenzialausgleichsschiene 114 möglich.

Um eine sicherere Befestigung der Blitzschutz- oder Erdungsleiter 112 zu gewährleisten, weist der Federschenkel 118 vorliegend zudem einen Sicherungsvorsprung 128 auf.

Der Sicherungsvorsprung 128 erstreckt sich vorzugsweise in Richtung des Anlageschenkels 116 und ist in Richtung des Anlageschenkels 116 vorgespannt.

Der Sicherungsvorsprung 128 ist einstückig mit dem Federschenkel 118 ausgebildet, da der Sicherungsvorsprung 128 vorzugsweise durch ein Ausstanzen aus dem Federschenkel 118 und entsprechendes Formen ausgebildet worden ist.

Zur Befestigung der Blitzschutzleiterklemme 110 an der Potenzialausgleichsschiene 114 ist beispielsweise sowohl im Anlageschenkel 116 als auch im Federschenkel 118 eine Befestigungsöffnung 130 vorgesehen.

Die beiden Befestigungsöffnungen 130 sind dabei so angeordnet, dass sie miteinander fluchten und ein Befestigungsmittel 132 aufnehmen können. Bei dem Befestigungsmittel 132 kann es sich beispielsweise um eine Schraube handeln.

Die Befestigungsöffnungen 130 des Anlageschenkels 116 und des Federschenkels 118 können dabei eine unterschiedliche Form aufweisen.

Wie insbesondere in Figur 2 zu sehen ist, ist in der gezeigten Ausführungsform die Befestigungsöffnung 130 des Federschenkels 118 quadratisch, wohingegen die Befestigungsöffnung 130 des Anlageschenkels 116 kreisrund ist. Prinzipiell kann die Befestigungsöffnung 130 rund oder viereckig sein. Aber auch andere geometrische Formen wie Vielecke kann die Befestigungsöffnung 130 haben.

Alternativ zu der Befestigung mit einer Schraube kann die Blitzschutzleiterklemme 110 auch an die Potenzialausgleichsschiene 114 genietet, mit einem Drehgelenk oder anderweitig befestigt werden. In dem Fall das die Befestigung mittels einer Niete erfolgt, kann in die Befestigungsöffnung 130 des Federschenkels 118 ein Fixiermittel eingebracht werden, um den Flachleiter 115 in der Blitzschutzleiterklemme 110 zusätzlich zu fixieren und so zu sichern.

Zudem kann die Blitzschutzleiterklemme 110 dabei drehbar, insbesondere um 360° drehbar, an der Potenzialausgleichsschiene 114 befestigt sein. Somit kann neben einer parallelen Fixierung sowohl eine senkrechte als auch windschiefe Fixierung realisiert werden.

Wie aus den Figuren ersichtlich ist, ist der Federschenkel 118 länger als der Anlageschenkel 116, wodurch sich eine Art Einschub- bzw. Einfädelhilfe ergibt. Zudem kann hierdurch die Blitzschutzleiterklemme 110 beim Einführen der Leiter 113, 115 leicht aufgehebelt bzw. aufgebogen werden, insbesondere beim Einführen des Flachleiters 115.

Prinzipiell ist der Anlageschenkel 116 wenigstens halb so lang wie der Federschenkel 118, wobei die Länge des Anlageschenkels 116 vorzugsweise zwei Dritteln der Länge des Federschenkels 118 entspricht.

Zum Befestigen des Rundleiters 113 und des Flachleiters 115 an der Potentialausgleichsschiene 114 mittels der Blitzschutzleiterklemme 110 wird zunächst der Rundleiter 113 in die Blitzschutzleiterklemme 110 eingeführt. Dabei verdrängt der Rundleiter 113 den Federschenkel 118, sodass dieser bewegt wird. Der Rundleiter 113 wird so weit in die Blitzschutzleiterklemme 110 eingeführt, bis dieser die erste Aufnahme erreicht 122 hat.

Anschließend wird der Flachleiter 115 in die Blitzschutzleiterklemme 110 eingeführt, wobei dieser wie auch der Rundleiter 113 den Federschenkel 118 verdrängt. Der Federschenkel 118 wird durch die Federvorspannkraft in Richtung seiner Ausgangsposition zurückbewegt, sodass der Flachleiter 115, insbesondere durch den Niederhaltabschnitt 126, gegen den Anlageschenkel 116 gedrückt wird.

Die Blitzschutzleiterklemme 110 wird dann auf der Potentialausgleichsschiene 114 positioniert, sodass die Befestigungsöffnungen 130 mit einer Öffnung bzw. Bohrung in der Potentialausgleichsschiene 114 fluchten, sodass das Befestigungsmittel 132 durch die Befestigungsöffnungen 130 in die Öffnung bzw. Bohrung der Potentialausgleichsschiene 114 eingeführt und hiermit befestigt werden kann.

Selbstverständlich ist es auch denkbar, dass lediglich ein Blitzschutz-oder Erdungsleiter 112, der als Flachleiter 115 oder Rundleiter 113 ausgeführt ist, mittels der Blitzschutzleiterklemme 110 an der Potentialausgleichsschiene 114 befestigt wird.

Gemäß einer in den Figuren nicht gezeigten Ausführungsform der Blitzschutzleiterklemme 110 können der Anlageschenkel 116 und/oder der Federschenkel 118 eine Ausbuchtung aufweisen, durch die wenigstens eine dritte Aufnahme definiert wird. Somit ist es auch möglich mehr als einen Rundleiter 113 mittels der Blitzschutzleiterklemme 110 an der Potentialausgleichsschiene 114 zu befestigen.

Auch können sowohl der Anlageschenkel 116 als auch der Federschenkel 118 jeweils eine Ausbuchtung aufweisen, wodurch sogar vier Aufnahmen vorgesehen sein können.

Ebenso können benachbarte Aufnahmen vorzugsweise unterschiedliche Größen haben, sodass unterschiedliche Leiter, insbesondere Leiter mit verschiedenen Größen, mittels der Blitzschutzleiterklemme 110 an der Potentialausgleichsschiene 114 befestigt werden können.

## Patentansprüche

1. Blitzschutzleiterklemme (110) zur Befestigung von wenigstens einem Blitzschutz- oder Erdungsleiter (112) an einer Potentialausgleichsschiene (114), mit
einem Anlageschenkel (116) zur Anlage an der Potentialausgleichsschiene (114),
einem dem Anlageschenkel (116) gegenüberliegenden Federschenkel (118),
wobei der Anlageschenkel (116) und der Federschenkel (118) über einen Übergangsabschnitt (120) miteinander verbunden sind, und wobei der Übergangsabschnitt (120) eine erste Aufnahme (122) für einen Rundleiter (113) ausbildet, und
wobei der Anlageschenkel (116) und der Federschenkel (118) eine zweite Aufnahme (124) für einen Flachleiter (115) ausbilden.

2. Blitzschutzleiterklemme (110) nach Anspruch 1, **dadurch gekennzeichnet, dass** der Federschenkel (118) einen Niederhaltabschnitt (126) aufweist, welcher an einer vom Übergangsabschnitt (120) abgewandten Seite des Federschenkels (118) vorgesehen ist, und wobei der Niederhaltabschnitt (126) in Richtung des Anlageschenkels (116) vorgespannt ist.

3. Blitzschutzleiterklemme (110) nach einem der Ansprüche 1 oder 2, **dadurch gekennzeichnet, dass** der Federschenkel (118) einen Sicherungsvorsprung (128) aufweist.

4. Blitzschutzleiterklemme (110) nach Anspruch 3, **dadurch gekennzeichnet, dass** der Sicherungsvorsprung (128) durch Ausstanzen aus dem Federschenkel (118) gebildet ist.

5. Blitzschutzleiterklemme (110) nach einem der Ansprüche 3 oder 4, **dadurch gekennzeichnet, dass** sich der Sicherungsvorsprung (128) in Richtung des Übergangsabschnitts (120) erstreckt.

6. Blitzschutzleiterklemme (110) nach einem der vorhergehenden Ansprüche, **dadurch gekennzeichnet, dass** in dem Anlageschenkel (116) und in dem Federschenkel (118) jeweils eine Befestigungsöffnung (130) vorgesehen ist, wobei die Befestigungsöffnungen (130) miteinander fluchten und eingerichtet sind, ein Befestigungsmittel (132) aufzunehmen, womit die Blitzschutzleiterklemme (110) an der Potentialausgleichsschiene (114) befestigbar ist.

7. Blitzschutzleiterklemme (110) nach Anspruch 6, **dadurch gekennzeichnet, dass** die Blitzschutzleiterklemme (110) drehbar an der Potentialausgleichsschiene (114) befestig ist, insbesondere wobei die Blitzschutzleiterklemme (110) mittels eines Drehgelenks, einer Schraube oder einer Niete an der Potentialausgleichsschiene (114) befestigt ist.

8. Blitzschutzleiterklemme (110) nach Anspruch 6 oder 7, **dadurch gekennzeichnet, dass** die Befestigungsöffnung (130) rund oder viereckig, insbesondere quadratisch, ist.

9. Blitzschutzleiterklemme (110) nach einem der vorhergehenden Ansprüche, **dadurch gekennzeichnet, dass** der Übergangsabschnitt (120) im Querschnitt teilkreisförmig ausgebildet ist, und wobei der Übergangsabschnitt (120) im Querschnitt länger als ein Halbkreis ausgebildet ist.

10. Blitzschutzleiterklemme (110) nach Anspruch 9, **dadurch gekennzeichnet, dass** der Querschnitt des Übergangsabschnitts (120) kleiner ist als der Querschnitt des zu befestigten Rundleiters (113).

11. Blitzschutzleiterklemme (110) nach einem der vorhergehenden Ansprüche, **dadurch gekennzeichnet, dass** die Blitzschutzleiterklemme (110) einstückig aus einem Federblech ausgebildet ist.

12. Blitzschutzleiterklemme (110) nach einem der vorhergehenden Ansprüchen, **dadurch gekennzeichnet, dass** der Anlageschenkel (116) wenigstens halb so lang wie der Federschenkel (118) ist, insbesondere wobei die Länge des Anlageschenkels (116) wenigstens zwei Dritteln der Länge des Federschenkels (118) entspricht.

13. Blitzschutzleiterklemme (110) nach einem der vorhergehenden Ansprüche, **dadurch gekennzeichnet, dass** der Anlageschenkel (116) und/oder der Federschenkel (118) wenigstens eine Ausbuchtung aufweisen bzw. aufweist, die eine dritte Aufnahme bildet, wobei die Größe von benachbarten Aufnahmen unterschiedlich ist.

14. Blitzschutzleiterklemme (110) nach einem der vorhergehenden Ansprüche, **dadurch gekennzeichnet, dass** der Anlageschenkel (116) und/oder der Federschenkel (118) Prägungen (125) aufweisen bzw. aufweist.
